Europäisches Patentamt

(19) European Patent Office

Office européen des brevets

(11) Numéro de publication : **0 005 672**
**B1**

(12) **FASCICULE DE BREVET EUROPÉEN**

(45) Date de publication du fascicule du brevet :
**19.05.82**

(21) Numéro de dépôt : **79400309.5**

(22) Date de dépôt : **16.05.79**

(51) Int. Cl.³ : **H 04 N   5/00, H 04 N   5/22,**
**G 06 F   3/153, G 09 G   1/00,**
**G 06 F   3/14**

(54) **Dispositif pour appareil de titrage pour télévision.**

(30) Priorité : **22.05.78 US 908084**

(43) Date de publication de la demande :
**28.11.79 (Bulletin 79/24)**

(45) Mention de la délivrance du brevet :
**19.05.82 Bulletin 82/20**

(84) Etats contractants désignés :
**DE FR GB NL**

(56) Documents cités :
**EU - A - 3 307**
**FR - A - 2 351 551**
**GB - A - 1 486 774**
**US - A - 3 422 420**
**US - A - 3 740 743**
**US - A - 3 993 864**

(73) Titulaire : **THOMSON-CSF**
**173, Boulevard Haussmann**
**F-75360 Paris Cedex 08 (FR)**

(72) Inventeur : **Bakach, Joseph**
**"THOMSON-CSF LABORATORIES INC" 37 Brown**
**House**
**Stamford Connecticut, 06902 (US)**
Inventeur : **McMann Jr., Renville H.**
**"THOMSON-CSF LABORATORIES INC" 37 Brown**
**House**
**Stamford Connecticut, 06902 (US)**

(74) Mandataire : **Courtellemont, Alain et al**
**THOMSON-CSF SCPI 173, Bld Haussmann**
**F-75360 Paris Cedex 08 (FR)**

EP 0 005 672 B1

Imprimerie Jouve, 18, rue St-Denis, 75001 Paris, France

## Dispositif pour appareil de titrage pour télévision.

Description pour les Etats contractants :
DE, FR, NL.

La présente invention concerne un dispositif à fonctionnement numérique pour un appareil de titrage pour télévision qui reçoit des signaux numériques d'entrée correspondant à une information de titre et qui produit des signaux vidéo en vue de l'affichage de l'information sous une forme visible, et elle a trait plus particulièrement à un appareil du type défini ci-dessus, qui soit commodément et efficacement adaptable pour représenter des langues qui se lisent de la droite vers la gauche ainsi que des langues, telles que l'anglais, qui se lisent de la gauche vers la droite.

Des systèmes de conversion d'information numérique de titre en signaux vidéo convenant pour être affichés sous une forme lisible sont largement employés à l'heure actuelle. On utilise par exemple ces systèmes pour afficher uniquement une information de titre sur un écran, comme cela est effectué en particulier pour des données financières. Une information de titre peut également être établie pour l'affichage, en association avec une information d'image de télévision classique. Ce problème est généralement résolu par combinaison du signal d'image vidéo et du signal de titre vidéo en utilisant des techniques de traitement connues.

On a décrit dans le brevet des Etats-Unis d'Amérique n° 3 422 420 un système qui reçoit des caractères codés numériquement et qui produit des signaux vidéo de caractères appropriés pour l'affichage en utilisant un motif d'analyse de trame de télévision. Dans ce système, les signaux de caractères codés numériquement et reçus à l'entrée en vue de leur affichage dans une rangée sont mémorisés dans des positions ordonnées dans des registres à décalage opérant une recirculation. Différents signaux de temporisation, synchronisés avec le système d'analyse d'affichage, sont engendrés dans des séquences répétitives et divisent effectivement l'analyse d'affichage en plusieurs « zones d'espaces de caractères » de dimensions égales et prédéterminées. Un motif de caractère, ou tracé de contour, est formé dans une zone d'espace de caractères sur le dispositif d'affichage par établissement du faisceau d'analyse quand celui-ci décrit le dispositif d'affichage. En conséquence, chaque caractère est formé sur l'écran sous la forme d'une série de « traits » pendant des lignes successives d'analyse. Les signaux de caractère sont extraits des registres à décalage un par un et un sous-système de « génération de caractères » engendre les signaux vidéo de traits appropriés (ordre d'établissement et de suppression de faisceau) qui correspondent aux caractères en train d'être lus dans le registre. Les signaux de synchronisation commandent le décalage et la lecture des signaux de caractères dans les registres à recirculation de manière qu'un nouveau signal de caractère soit lu à chaque fois que le faisceau d'analyse passe dans une nouvelle zone d'espace de caractère. Après avoir été lu, chaque signal de caractère est réinséré dans les registres à recirculation en vue d'être ressorti pendant la ligne d'analyse suivante lorsque les traits suivants de chaque caractère sont engendrés dans la rangée d'affichage. La perception visuelle de l'œil fait en sorte qu'on perçoive un caractère complet à partir des traits séparés correspondant au caractère et produits pendant chaque ligne d'analyse.

Dans le brevet des Etats-Unis d'Amérique n° 3 740 743, un appareil de titrage utilisable en télévision a été revendiqué ; il produit des caractères espacés proportionnellement pour un affichage, c'est-à-dire des caractères qui ont des « espaces de caractères » de tailles différentes. Par exemple, à un « W » a été affecté un espace de caractère bien plus grand qu'à un « I ». Dans l'appareil faisant l'objet du brevet américain précité, la mémoire à recirculation est soumise à un décalage en réponse à des signaux de synchronisation d'espacement qui sont engendrés par un détecteur d'espacement réagissant aux signaux de caractères et qui comprend un moyen servant à produire des signaux de synchronisation d'espacement qui sont fonction de la largeur du caractère à afficher instantanément. Un générateur de trait qui est sensible aux signaux de synchronisation et aux signaux de synchronisation d'espacement engendre un trait d'un caractère en train d'être affiché.

Dans les deux systèmes de titrage pour télévision cités ci-dessus, la description est faite en fonction d'un affichage de caractères de la gauche vers la droite, comme cela est classique pour l'anglais et de nombreuses autres représentations linguistiques. Cependant, il existe un certain nombre de langues importantes, telles que l'arabe, l'hébreu, etc., utilisées dans des pays qui ont besoin d'équipements de titrage pour télévision et qui nécessitent une représentation de caractères de la droite vers la gauche. Il devrait être théoriquement possible de concevoir un système de titrage pour télévision qui soit agencé conformément aux types de systèmes précités et qui soit cependant capable d'afficher des caractères de la droite vers la gauche. Cependant, une telle conception nouvelle se traduirait obligatoirement par des différences considérables dans la structure et l'agencement des systèmes et il en résulterait une augmentation du prix de revient et, également, une certaine inefficacité du fait qu'on disposerait de deux structures différentes non interchangeables. A cet égard, il serait particulièrement utile de pouvoir disposer d'un système de base susceptible d'être employé aussi bien pour des langues lisibles de la gauche vers la droite que pour des langues lisibles de la droite vers la gauche, sans modifications ou frais importants. Ce problème est particulièrement difficile à résoudre dans le cas du système de titrage faisant l'objet du brevet des Etats-Unis d'Amérique n° 3 740 743, où sont utilisés des caractères espacés proportionnellement (qui font intervenir des « espaces de caractères » de dimensions différentes). Dans ce cas, lorsque les caractères à afficher de la droite vers la gauche ont des largeurs différentes, on ne peut pas commodément changer des caractères de place sans tenir compte de leur dimension individuelle (comme cela pourrait être le cas dans un système à caractères espacés de façon non proportionnelle).

L'invention concerne un appareil de titrage pour télévision qui permet de résoudre le problème posé ci-dessus sans nécessiter une permutation des bornes du dispositif d'affichage comme cela est le cas dans le dispositif permettant de présenter des caractères d'une langue à lecture de la droite vers la gauche, qui est décrit dans la demande de brevet européen EU-A-3307.

L'invention, comme d'ailleurs la demande de brevet européen EU-A-3307, se rapporte à un dispositif à fonctionnement numérique pour présenter des caractères d'une langue lisible de la droite vers la gauche, utilisable dans un appareil destiné à recevoir une séquence de signaux de représentation de caractères et à engendrer des signaux de commande vidéo appropriés pour commander un dispositif d'affichage, l'appareil comportant un générateur de synchronisation servant à produire des signaux d'horloge qui sont synchronisés avec l'analyse d'affichage, des moyens de mémorisation de caractères servant à mémoriser les signaux représentant des caractères et à extraire périodiquement des signaux correspondant à un caractère de la séquence, et un générateur de traits sensible aux signaux d'horloge et aux signaux de représentation de caractères pour produire des bits de traits du caractère à afficher, et le dispositif à fonctionnement numérique comprenant des moyens pour mémoriser dans le générateur de traits des représentations de traits correspondant à des images symétriques ou inverses d'un ensemble de caractères de la langue, c'est-à-dire à des images telles que vues dans un miroir plan perpendiculaire au sens de lecture.

Dans la demande de brevet européen EU-A-3307 les signaux extraits des moyens pour mémoriser des représentations de traits correspondant à des images symétriques sont envoyés au dispositif d'affichage par le même chemin que les signaux extraits des moyens de mémorisation de caractères et relatifs à une langue à lecture de la gauche vers la droite ; quand un affichage d'une langue à lecture de la gauche vers la droite doit être remplacé par un affichage d'une langue à lecture de la droite vers la gauche, il faut, par un dispositif de commutation, effectuer une inversion entre les bornes d'entrée des signaux sur le dispositif d'affichage. Ceci a l'inconvénient, dans le cas où le dispositif d'affichage est le tube d'un récepteur de télévision classique recevant un signal vidéo, de nécessiter une modification de ce récepteur pour y introduire le dispositif de commutation afin de modifier le sens du balayage du tube.

La présente invention a pour but d'éviter cet inconvénient en fournissant un signal vidéo tel qu'il n'y ait pas besoin de modification au niveau des entrées du dispositif d'affichage. Ceci est obtenu en interposant, entre les moyens pour mémoriser des représentations de traits correspondant à des images symétriques et le dispositif d'affichage, un ensemble à mémoire qui permette d'envoyer, au dispositif d'affichage, les signaux relatifs à une ligne d'analyse dans l'ordre inverse de celui où il l'a reçu.

Selon l'invention, il est prévu à cet effet, dans le dispositif à fonctionnement numérique, des moyens auxiliaires de mémorisation en vue de mémoriser une ligne d'analyse de bits de traits provenant du générateur de traits. Il est également prévu d'autres moyens pour lire la ligne d'analyse de bits de traits dans les moyens auxiliaires de mémorisation, cette ligne d'analyse de bits de traits étant lue dans un ordre inverse de celui dans lequel les bits ont été introduits dans les moyens auxiliaires de mémorisation.

D'autres avantages et caractéristiques de l'invention seront mis en évidence, dans la suite de la description, donnée à titre d'exemple non limitatif, en référence aux dessins annexés dans lesquels :

la figure 1 est un schéma synoptique simplifié d'un appareil de titrage de type connu utilisable en télévision ;

la figure 2 est un schéma synoptique d'un sous-système correspondant à un mode de réalisation de l'invention, représenté en association avec une partie de l'appareil de la figure 1.

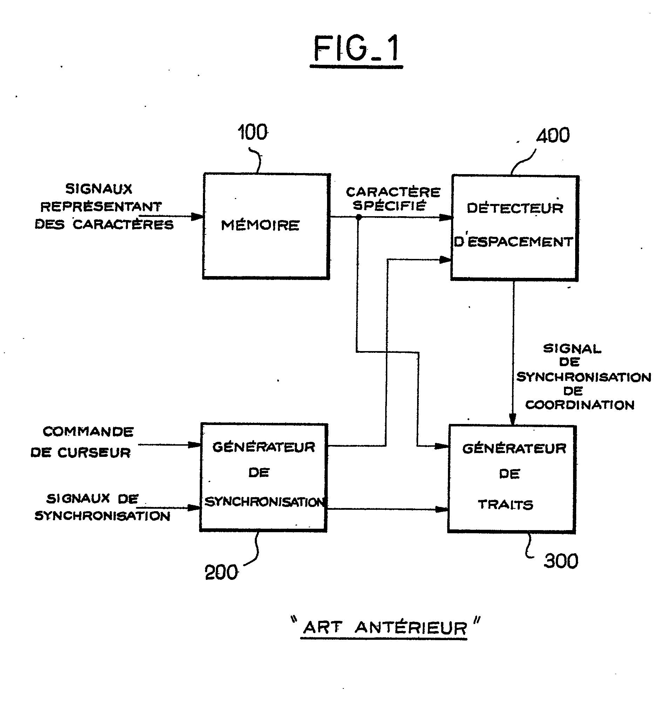

Sur la figure 1, a été représenté un schéma synoptique simplifié d'un appareil de titrage pour télévision du type revendiqué dans le brevet des Etats-Unis d'Amérique précité, n° 3 740 743. Une séquence de signaux numériques d'entrée représentant des caractères est reçue par une mémoire 100, par exemple un groupe de registres à décalage et à recirculation, ou bien une mémoire à accès aléatoire (RAM). Les signaux d'entrée représentant des caractères sont produits typiquement à l'aide d'un clavier à touches, mais ils peuvent également provenir d'un ordinateur ou d'une autre source appropriée. Dans le mode de réalisation particulier décrit dans le brevet précité, la mémoire 100 comprend un registre à décalage à six niveaux comportant plusieurs étages, le nombre d'étages étant déterminé par le nombre maximal de caractères à afficher finalement dans une rangée sur un dispositif d'affichage, par exemple vingt étages. La fonction de la mémoire 100 est d'« appeler » un caractère à un moment où un trait de celui-ci doit être présenté, cela se produisant typiquement une fois pendant chaque ligne d'analyse d'une séquence qui est fonction de la position de l'écran où le caractère particulier doit être reproduit. Lors de la fourniture des ordres appropriés, les six bits représentant le caractère dans le dernier étage du registre à décalage sont extraits puis réintroduits dans le premier étage du registre à recirculation. Le caractère extrait est appelé le « caractère spécifié » et ses bits ou signaux de représentation sont appelés les « signaux de caractère spécifié ». Ils correspondent au caractère dont un trait doit être engendré à un instant de référence particulier.

Un générateur de synchronisation 200 reçoit des signaux de synchronisation qui sont en relation avec le signal de télévision composite à engendrer, à savoir des signaux de synchronisation verticale et de synchronisation horizontale. Le générateur de synchronisation comprend une horloge de base, telle qu'un oscillateur réglé sur 10 mégacycles et qui produit des impulsions d'horloge toutes les cent nanosecondes. L'oscillateur est activé par le signal de synchronisation horizontale. Le générateur de synchronisation contient également différents compteurs qui assurent le suivi du nombre de lignes analysées par le dispositif d'affichage jusqu'à un instant donné. Lorsque l'analyse vidéo s'effectue dans une zone où la rangée de caractères doit être affichée, les compteurs produisent des signaux qui indiquent quelle ligne de la rangée est en train d'être analysée. Comme décrit dans le brevet américain précité, le générateur de synchronisation 200 comprend une commande de curseur qui détermine sur l'écran d'affichage final la position relative où un nouveau caractère (introduit à partir du clavier à touches) doit être placé. La position présente du curseur est indiquée par un petit point sur l'écran d'affichage final.

Un générateur de traits 300 (stroke generator dans la littérature anglo-saxonne) reçoit les signaux de caractère spécifié et une information de ligne provenant du générateur de synchronisation et il engendre en réponse des bits de traits servant à commander un dispositif d'affichage final en vue de produire le trait approprié du caractère spécifié. Le générateur de traits comprend typiquement une mémoire, telle qu'une mémoire fixe (ROM) ou bien une mémoire à accès aléatoire (RAM) qui est adressée par l'information de caractère reçue et par une information de ligne. Par exemple, si l'information reçue indique que le caractère spécifié est la majuscule « M » et que la ligne d'analyse présente est la ligne supérieure du « M » les bits de traits sortant de la mémoire sont alors des signaux séquentiels qui commandent le faisceau d'analyse du dispositif d'affichage final de manière à l'établir puis à le supprimer deux fois successivement pour produire la partie supérieure d'un « M ». Le générateur de traits comprend également une seconde mémoire fixe ROM qui est utilisée pour engendrer les bits de traits qui font apparaître le point de curseur sur l'écran d'affichage. Pendant la période de référence horizontale correspondant à la position du curseur, des bits de traits sont engendrés de façon à présenter le point sur l'écran d'affichage. Le générateur de traits peut être de toute conception appropriée, et il peut produire des bits de sortie dans n'importe quel code approprié.

Les signaux de caractère spécifié sont également reçus par un détecteur d'espacement 400 qui détermine la largeur du caractère spécifié et qui engendre un signal de synchronisation d'espacement qui dépend du temps où le faisceau d'analyse horizontale parcourt la zone d'affichage en vue de produire le caractère spécifié. Les signaux de synchronisation d'espacement sont utilisés pour produire un décalage de la mémoire à recirculation 100 de façon que le caractère suivant de la séquence devienne le nouveau caractère « spécifié » dans le dernier étage de la mémoire à recirculation 100. Le trait approprié du nouveau caractère spécifié est alors engendré. Le détecteur d'espacement engendre également un signal de synchronisation de coordination, qui est synchronisé avec le signal de synchronisation d'espacement, en vue de la commande synchronisée de la génération et de la lecture des bits de traits. Il est à noter que, bien que la présente invention soit applicable en particulier au type d'appareil revendiqué dans ce brevet américain, elle s'applique également à différents types d'équipement de titrage (avec ou sans « détecteur d'espacement » et « espacement proportionnel »).

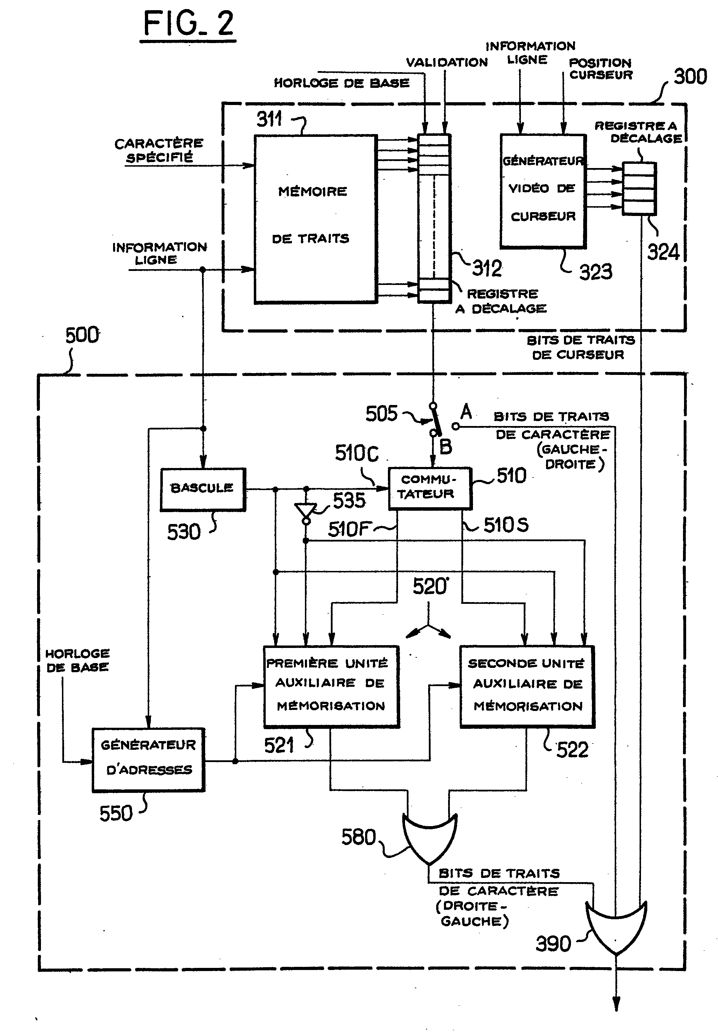

Sur la figure 2, les modifications propres à l'invention ont été détaillées. Le générateur de traits 300, entouré par des lignes en traits interrompus, est conforme au générateur de traits intervenant dans le brevet américain précité n° 3 740 743. Ce générateur de traits comprend, en particulier, une mémoire de traits 311 qui est utilisée pour engendrer les bits de traits correspondant au caractère spécifié, et un générateur vidéo de curseur 323, qui peut simplement être constitué par une autre mémoire fixe ou à accès aléatoire, et qui est utilisé d'une façon connue pour produire les bits de traits destinés à présenter le point de curseur sur le dispositif d'affichage final. Chacune de ces mémoires produit une pluralité de bits de sortie en parallèle ; ces bits de sortie sont appliqués à un registre à décalage, les bits étant transmis en série et de façon synchronisé à la sortie du registre. En ce qui concerne la mémoire de traits 311 elle réagit au caractère spécifié et à la ligne particulière (ou « tranche ») du caractère en train d'être formé, de façon à produire jusqu'à trente-trois bits de sortie parallèles qui sont appliqués à un registre à décalage 312. Ces bits sortent ensuite en série et de façon synchronisée du registre à décalage 312 sous l'action de l'horloge de base du système. Un signal de validation provenant du circuit de synchronisation 200 (figure 1) amorce cette phase de lecture. Le générateur vidéo de curseur 323 comprend une mémoire qui est sensible à la ligne d'analyse et à la position horizontale du curseur de référence (qui est soumis à la commande de l'opérateur). Pendant chaque trame de télévision, les bits de traits représentant une tranche de caractères sont par conséquent produits par la mémoire 323 lorsque la position d'analyse correspond à la position de référence de curseur définie par l'opérateur. Les bits de traits résultants (au nombre de quatre) sont introduits en parallèle dans un registre à décalage 324 à quatres étages. Ces bits de traits sortent ensuite de façon synchronisée du registre 324 et ils sont combinés avec les bits de traits représentant un caractère, par une porte OU 390.

Jusqu'à ce point de la description de la figure 2, la structure et le fonctionnement du système correspondent à ce qui a été décrit dans le brevet des Etats-Unis d'Amérique n° 3 740 743. Conformément à la présente invention, il est prévu un sous-système 500, destiné à présenter les caractères d'une langue lisible de la droite vers la gauche. Le sous-système 500 comporte un commutateur 505 qui applique le signal de sortie du registre à décalage 312, soit à la porte OU 390 (position A du commutateur 505), soit à un autre commutateur, 510 (position B du commutateur 505). Dans la position A du commutateur 505, le fonctionement est classique et il correspond à ce qui a été décrit précédemment, la porte OU 390 servant à combiner les bits de traits de caractère et de curseur. Cela est le cas, par exemple, lorsqu'une série de caractères alphanumériques d'une langue lisible de la gauche vers la droite est introduite dans la mémoire de traits 311. Pour utiliser l'équipement avec une langue lisible de la droite vers la gauche, on introduit d'abord dans la mémoire de traits 311 des images symétriques (ou inverses) des caractères alphanumériques à présenter, c'est-à-dire des images telles que vues dans un miroir plan perpendiculaire au sens de lecture. Comme indiqué précédemment, la mémoire de traits 311 peut comprendre une mémoire fixe (ROM) ou une mémoire à accès aléatoire (RAM). Si la mémoire de traits 311 est une mémoire à accès aléatoire RAM ou une mémoire fixe programmable PROM, on peut simplement charger l'unité avec les informations de traits appropriées correspondant à des images symétriques des caractères alphanumériques (on a alors simplement affaire aux inverses des traits qui seraient normalement mémorisés pour chaque caractère). Si la mémoire de traits 311 est une mémoire fixe non programmable, elle est initialement pourvue des informations de traits correspondant aux images symétriques. Dans l'un ou l'autre cas, on voit qu'on pourrait éventuellement prévoir une mémoire séparée (ou bien utiliser des emplacements différents de la mémoire existante) pour des symboles alphanumériques d'une langue lisible de la droite vers la gauche. Cependant, il est préférable que la mémoire de traits 311 comprenne une mémoire à accès aléatoire RAM qu'on puisse commodément charger avec des informations de traits appropriées.

Le commutateur 510 comporte une première et une seconde sortie qui sont désignées respectivement par 510F et 510S. Ces sorties sont reliées à une mémoire auxiliaire 520 qui comprend une première unité auxiliaire de mémorisation 521 et une seconde unité auxiliaire de mémorisation 522. En fonction du niveau d'un signal appliqué à l'entrée de commande 510C du commutateur 510, le signal de sortie du commutateur 510 est appliqué à l'une ou à l'autre des unités auxiliaires de mémorisation 521, 522. L'entrée de commande 510C du commutateur 510 reçoit le signal de sortie d'une bascule 530 qui change d'état pour chaque nouvelle ligne d'analyse. En conséquence, la sortie de la bascule 530 change d'état au début de chaque nouvelle ligne d'analyse. Le signal de sortie de la bascule 530 est également appliqué à la borne d'autorisation d'entrée de l'unité de mémorisation 521 et à la borne d'autorisation de sortie de l'unité de mémorisation 522. Le signal de sortie de la bascule 530 est en outre appliqué à un inverseur 535 dont le signal de sortie est transmis à la borne d'autorisation de sortie de l'unité auxiliaire de mémorisation 521 et à la borne d'autorisation d'entrée de l'unité auxiliaire de mémorisation 522. Par conséquent, pendant une ligne d'analyse particulière, le signal de sortie du registre à décalage 312 est transmis à la première unité auxiliaire de mémorisation, 521, quand cette unité est autorisée à recevoir et mémoriser la nouvelle information. En même temps, la seconde unité auxiliaire de mémorisation est autorisée à faire sortir l'information qu'elle avait mémorisée pendant la ligne d'analyse précédente. Au début de la ligne d'analyse suivante, les rôles des unités auxiliaires de mémorisation 521 et 522 sont inversés, la seconde unité auxiliaire de mémorisation 522 recevant alors l'information de bits de traits provenant du registre à décalage 312, tandis que la première unité auxiliaire de mémorisation 521 fournit l'information de bits de traits mémorisée pendant la ligne d'analyse précédente. Les signaux de sortie des unités auxiliaires de mémorisation 521 et 522 sont combinés, à l'aide d'une porte OU 580 dont le signal de sortie est à son tour combiné, par la porte OU 390, avec les bits de traits de curseur.

Dans le mode de réalisation considéré, la première et la seconde unité auxiliaire de mémorisation, 521 et 522, sont des mémoires à accès aléatoire RAM (ou bien des parties différentes de la même mémoire RAM) et des adresses pour lesdites mémoires sont fournies par un générateur d'adresses 550. Ce générateur d'adresses 550 comprend un compteur qui, lorsqu'il est activé, compte des impulsions d'horloge jusqu'à un nombre prédéterminé « N » qui est égal au nombre d'impulsions d'horloge dans une ligne d'analyse. Lorsqu'il est activé par la ligne d'analyse suivante, le compteur effectue alors un comptage décroissant vers zéro. De cette manière, pendant chaque seconde ligne d'analyse, des adresses progressivement croissantes sont engendrées alors que, pendant les lignes d'analyses alternées, des adresses progressivement décroissantes sont engendrées. Puisque les unités auxiliaires de mémorisation 521 et 522 effectuent une lecture puis une écriture pendant des lignes d'analyse successives (bien que déphasées entre elles), cela signifie que l'information emmagasinée dans chacune des unités auxiliaires de mémorisation, 521 et 522 est lue sur une base « dernier entré-premier sorti », c'est-à-dire dans un ordre inverse de celui dans lequel l'information a été écrite en mémoire.

En fonctionnement, lorsqu'on utilise le circuit de présentation de langue lisible de la droite vers la gauche et agencé selon l'invention (position B du commutateur 505), les traits de caractères extraits de la mémoire 311 sont en fait présentés sur l'écran final de la gauche vers la droite. Cependant, lorsque les bits de traits de chaque caractère sont extraits de la mémoire de traits, ils sont accumulés dans une des unités auxiliaires de mémorisation dans l'ordre où ils sont reçus. La ligne d'analyse complète est alors lue (pendant que la ligne d'analyse suivante est en train d'être écrite dans l'autre unité auxiliaire de mémorisation) dans l'ordre opposé à celui où elle a été écrite. En conséquence, les caractères, bien qu'effectivement présentés sur l'écran d'affichage en utilisant une analyse et une présentation de traits de la gauche vers la droite, sont placés dans l'ordre correct de la droite vers la gauche. L'inversion de chaque orientation de caractère, résultant de ce processus, est prise en considération par chargement initial des images symétriques des caractères dans la mémoire de traits 311, comme cela a été décrit ci-dessus. Egalement, puisque les caractères sont maintenant introduits dans le dispositif d'affichage en référence à une présentation de la droite vers la gauche, on doit inverser la référence de curseur, ce problème étant commodément résolu en remplaçant le mode classique de comptage croissant par un mode de comptage décroissant dans le circuit de synchronisation 200 (figure 1).

La présente invention n'est nullement limitée aux modes de réalisation décrits et représentés ; elle est susceptible de nombreuses variantes accessibles à l'homme de l'art, suivant les applications envisagées. Par exemple, bien que dans la description la mémoire auxiliaire soit une mémoire de type RAM (mémoire à accès aléatoire), tout autre type approprié de mémoire peut être utilisé. Par exemple, les unités auxiliaires de mémorisation pourraient comporter des registres à décalage synchronisés, à l'entrée, dans une direction et, à la sortie, dans la direction opposée, de façon à obtenir un mode opératoire « dernier entré-premier sorti ». Dans ce cas, il ne serait pas nécessaire d'utiliser le générateur d'adresses 550. Des informations de caractères en couleur peuvent également être traitées de la même manière que décrit ci-dessus. Dans le cas d'une information en couleur, et puisque sa largeur de bande est bien inférieure à la largeur de bande de luminescence de télévision, il est possible d'opérer à une cadence d'horloge plus faible et avec une moins grande capacité de mémorisation.

## Description pour l'Etat contractant GB

La présente invention concerne un dispositif à fonctionnement numérique pour un appareil de titrage pour télévision qui reçoit des signaux numériques d'entrée correspondant à une information de titre et qui produit des signaux vidéo en vue de l'affichage de l'information sous une forme visible, et elle a trait plus particulièrement à un appareil du type défini ci-dessus, qui soit commodément et efficacement adaptable pour représenter des langues qui se lisent de la droite vers la gauche ainsi que des langues, telles que l'anglais, qui se lisent de la gauche vers la droite.

Des systèmes de conversion d'information numérique de titre en signaux vidéo convenant pour être affichés sous une forme lisible sont largement employés à l'heure actuelle. On utilise par exemple ces systèmes pour afficher uniquement une information de titre sur écran, comme cela est effectué en particulier pour des données financières. Une information de titre peut également être établie pour l'affichage, en association avec une information d'image de télévision classique. Ce problème est généralement résolu par combinaison du signal d'image vidéo et du signal de titre vidéo en utilisant des techniques de traitement connues.

On a décrit dans le brevet des Etats-Unis d'Amérique n° 3 422 420 un système qui reçoit des caractères codés numériquement et qui produit des signaux vidéo de caractères appropriés pour l'affichage en utilisant un motif d'analyse de trame de télévision. Dans ce système, les signaux de caractères codés numériquement et reçus à l'entrée en vue de leur affichage dans une rangée sont mémorisés dans des positions ordonnées dans des registres à décalage opérant une recirculation. Différents signaux de temporisation, synchronisés avec le système d'analyse d'affichage, sont engendrés dans des séquences répétitives et divisent effectivement l'analyse d'affichage en plusieurs « zones d'espaces de caractères » de dimensions égales et prédéterminées. Un motif de caractère, ou tracé de contour, est formé dans une zone d'espace de caractères sur le dispositif d'affichage par établissement du faisceau d'analyse quand celui-ci décrit le dispositif d'affichage. En conséquence, chaque caractère est formé sur l'écran sous la forme d'une série de « traits » pendant des lignes successives d'analyse. Les signaux de caractère sont extraits des registres à décalage un par un et un sous-système de « génération de caractères » engendre les signaux vidéo de traits appropriés (ordre d'établissement et de suppression de faisceau) qui correspondent aux caractères en train d'être lus dans le registre. Les signaux de synchronisation commandent le décalage et la lecture des signaux de caractères dans les registres à recirculation de manière qu'un nouveau signal de caractère soit lu à chaque fois que le faisceau d'analyse passe dans une nouvelle zone d'espace de caractère. Après avoir été lu, chaque signal de caractère est réinséré dans les registres à recirculation en vue d'être ressorti pendant la ligne d'analyse suivante lorsque les traits suivants de chaque caractère sont engendrés dans la rangée d'affichage. La perception visuelle de l'œil fait en sorte qu'on perçoive un caractère complet à partir des traits séparés correspondant au caractère et produits pendant chaque ligne d'analyse.

Dans le brevet des Etats-Unis d'Amérique n° 3 740 743, un appareil de titrage utilisable en télévision a été revendiqué ; il produit des caractères espacés proportionnellement pour un affichage, c'est-à-dire des caractères qui ont des « espaces de caractères » de tailles différentes. Par exemple, à un « W » a été affecté un espace de caractère bien plus grand qu'à un « I ». Dans l'appareil faisant l'objet du brevet américain précité, la mémoire à recirculation est soumise à un décalage en réponse à des signaux de synchronisation d'espacement qui sont engendrés par un détecteur d'espacement réagissant aux signaux de caractères et qui comprend un moyen servant à produire des signaux de synchronisation d'espacement qui sont fonction de la largeur du caractère à afficher instantanément. Un générateur de trait qui est sensible aux signaux de synchronisation et aux signaux de synchronisation d'espacement engendre un trait d'un caractère en train d'être affiché.

Dans les deux systèmes de titrage pour télévision cités ci-dessus, la description est faite en fonction d'un affichage de caractères de la gauche vers la droite, comme cela est classique pour l'anglais et de nombreuses autres représentations linguistiques. Cependant, il existe un certain nombre de langues importantes, telles que l'arabe, l'hébreu, etc., utilisées dans des pays qui ont besoin d'équipements de titrage pour télévision et qui nécessitent une représentation de caractères de la droite vers la gauche. Il devrait être théoriquement possible de concevoir un système de titrage pour télévision qui soit agencé conformément aux types de systèmes précités et qui soit cependant capable d'afficher des caractères de la droite vers la gauche. Cependant, une telle conception nouvelle se traduirait obligatoirement par des différences considérables dans la structure et l'agencement des systèmes et il en résulterait une augmentation du prix de revient et, également, une certaine inefficacité du fait qu'on disposerait de deux structures différentes non interchangeables. A cet égard, il serait particulièrement utile de pouvoir disposer d'un système de base susceptible d'être employé aussi bien pour des langues lisibles de la gauche vers la droite que pour des langues lisibles de la droite vers la gauche, sans modifications ou frais importants. Ce problème est particulièrement difficile à résoudre dans le cas du système de titrage faisant l'objet du brevet des Etats-Unis d'Amérique n° 3 740 743, où sont utilisés des caractères espacés proportionnellement (qui font intervenir des « espaces de caractères » de dimensions différentes). Dans ce cas, lorsque les caractères à afficher de la droite vers la gauche ont des largeurs différentes, on ne peut pas commodément changer des caractères de place sans tenir compte de leur dimension individuelle (comme cela pourrait être le cas dans un système à caractères espacés de façon non proportionnelle).

L'invention a, en conséquence, pour but de fournir un appareil de titrage pour télévision qui permette de résoudre le problème posé ci-dessus.

L'invention concerne par conséquent un dispositif destiné à un appareil de titrage pour télévision de type classique, conçu pour une présentation des caractères de la gauche vers la droite, ce dispositif permettant d'utiliser l'appareil pour effectuer un affichage des caractères de la droite vers la gauche pour des langues qui exigent une telle présentation. Le dispositif selon l'invention peut être utilisé en coopération avec tout appareil de titrage pour télévision de type approprié, mais il est particulièrement avantageux de l'utiliser en coopération avec un appareil de titrage pour télévision du type à caractères espacés proportionnellement. En particulier, l'invention est applicable à un appareil qui reçoit une séquence de signaux représentant des caractères et qui produit des signaux de commande vidéo servant à commander un dispositif d'affichage en vue de présenter la séquence de caractères sur l'écran de ce dispositif. L'appareil comprend un générateur de synchronisation servant à produire des signaux d'horloge qui sont synchronisés avec l'analyse d'affichage et des moyens de mémorisation de caractères servant à mémoriser les signaux représentant des caractères et à lire périodiquement des signaux représentant des caractères qui correspondent à un caractère de la séquence. L'appareil auquel l'invention est destinée comprend également un générateur de traits réagissant aux signaux d'horloge et aux signaux représentant des caractères pour produire des bits de traits correspondant au caractère à afficher.

Selon l'invention, il est prévu des moyens pour mémoriser, dans le générateur de traits, des représentations de traits inverses d'un ensemble de caractères de la langue particulière considérée, c'est-à-dire des représentations des images des caractères de cet ensemble telles que vues dans un miroir plan perpendiculaire au sens de lecture. Il est prévu des moyens auxiliaires de mémorisation en vue de mémoriser une ligne d'analyse de bits de traits provenant du générateur de traits. Il est également prévu d'autres moyens pour lire la ligne d'analyse de bits de traits dans les moyens auxiliaires de mémorisation, cette ligne d'analyse de bits de traits étant lue dans un ordre inverse de celui dans lequel les bits ont été introduits dans les moyens auxiliaires de mémorisation.

D'autres avantages et caractéristiques de l'invention seront mis en évidence, dans la suite de la description, donnée à titre d'exemple non limitatif, en référence aux dessins annexés dans lesquels :

la figure 1 est un schéma synoptique simplifié d'un appareil de titrage de type connu utilisable en télévision ;

la figure 2 est un schéma synoptique d'un sous-système correspondant à un mode de réalisation de l'invention, représenté en association avec une partie de l'appareil de la figure 1.

Sur la figure 1, a été représenté un schéma synoptique simplifié d'un appareil de titrage pour télévision du type revendiqué dans le brevet des Etats-Unis d'Amérique précité, n° 3 740 743. Une séquence de signaux numériques d'entrée représentant des caractères est reçue par une mémoire 100, par exemple un groupe de registres à décalage et à recirculation, ou bien une mémoire à accès aléatoire (RAM). Les signaux d'entrée représentant des caractères sont produits typiquement à l'aide d'un clavier à touches, mais ils peuvent également provenir d'un ordinateur ou d'une autre source appropriée. Dans le mode de réalisation particulier décrit dans le brevet précité, la mémoire 100 comprend un registre à décalage à six niveaux comportant plusieurs étages, le nombre d'étages étant déterminé par le nombre maximal de caractères à afficher finalement dans une rangée sur un dispositif d'affichage, par exemple vingt étages. La fonction de la mémoire 100 est d'« appeler » un caractère à un moment où un trait de celui-ci doit être présenté, cela se produisant typiquement une fois pendant chaque ligne d'analyse d'une séquence qui est fonction de la position de l'écran où le caractère particulier doit être reproduit. Lors de la fourniture des ordres appropriés, les six bits représentant le caractère dans le dernier étage du registre à décalage sont extraits puis réintroduits dans le premier étage du registre à recirculation. Le caractère extrait est appelé le « caractère spécifié » et ses bits ou signaux de représentation sont appelés les « signaux de caractère spécifié ». Ils correspondent au caractère dont un trait doit être engendré à un instant de référence particulier.

Un générateur de synchronisation 200 reçoit des signaux de synchronisation qui sont en relation avec le signal de télévision composite à engendrer, à savoir des signaux de synchronisation verticale et de synchronisation horizontale. Le générateur de synchronisation comprend une horloge de base, telle qu'un oscillateur réglé sur 10 mégacycles et qui produit des impulsions d'horloge toutes les cent nanosecondes. L'oscillateur est activé par le signal de synchronisation horizontale. Le générateur de synchronisation contient également différents compteurs qui assurent le suivi du nombre de lignes analysées par le dispositif d'affichage jusqu'à un instant donné. Lorsque l'analyse vidéo s'effectue dans une zone où la rangée de caractères doit être affichée, les compteurs produisent des signaux qui indiquent quelle ligne de la rangée est en train d'être analysée. Comme décrit dans le brevet américain précité, le générateur de synchronisation 200 comprend une commande de curseur qui détermine sur l'écran d'affichage final la position relative où un nouveau caractère (introduit à partir du clavier à touches) doit être placé. La position présente du curseur est indiquée par un petit point sur l'écran d'affichage final.

Un générateur de traits 300 (stroke generator dans la littérature anglo-saxonne) reçoit les signaux de caractère spécifié et une information de ligne provenant du générateur de synchronisation et il engendre en réponse des bits de traits servant à commander un dispositif d'affichage final en vue de produire le trait approprié du caractère spécifié. Le générateur de traits comprend typiquement une mémoire, telle qu'une mémoire fixe (ROM) ou bien une mémoire à accès aléatoire (RAM) qui est adressée par l'information de caractère reçue et par une information de ligne. Par exemple, si l'information reçue indique que le caractère spécifié est la majuscule « M » et que la ligne d'analyse présente est la ligne supérieure du « M », les bits des traits sortant de la mémoire sont alors des signaux séquentiels qui commandent le faisceau d'analyse du dispositif d'affichage final de manière à l'établir puis à la supprimer deux fois successivement pour produire la partie supérieure d'un « M ». Le générateur de traits comprend également une seconde mémoire fixe ROM qui est utilisée pour engendrer les bits de traits qui font apparaître le point de curseur sur l'écran d'affichage. Pendant la période de référence horizontale correspondant à la position du curseur, des bits de traits sont engendrés de façon à présenter le point sur l'écran d'affichage. Le générateur de traits peut être de toute conception appropriée, et il peut produire des bits de sortie dans n'importe quel code approprié.

Les signaux de caractère spécifié sont également reçus par un détecteur d'espacement 400 qui détermine la largeur du caractère spécifié et qui engendre un signal de synchronisation d'espacement qui dépend du temps où le faisceau d'analyse horizontale parcourt la zone d'affichage en vue de produire le caractère spécifié. Les signaux de synchronisation d'espacement sont utilisés pour produire un décalage de la mémoire à recirculation 100 de façon que le caractère suivant de la séquence devienne le nouveau caractère « spécifié » dans le dernier étage de la mémoire à recirculation 100. Le trait approprié du nouveau caractère spécifié est alors engendré. Le détecteur d'espacement engendre également un signal de synchronisation de coordination, qui est synchronisé avec le signal de synchronisation d'espacement, en vue de la commande synchronisée de la génération et de la lecture des bits de traits. Il est à noter que, bien que la présente invention soit applicable en particulier au type d'appareil revendiqué dans ce brevet américain, elle s'applique également à différents types d'équipements de titrage (avec ou sans « détecteur d'espacement » et « espacement proportionnel »).

Sur la figure 2, les modifications propres à l'invention ont été détaillées. Le générateur de traits 300, entouré par des lignes en traits interrompus, est conforme au générateur de traits intervenant dans le brevet américain précité n° 3 740 743. Ce générateur de traits comprend, en particulier, une mémoire de traits 311 qui est utilisée pour engendrer les bits de traits correspondant au caractère spécifié, et un générateur vidéo de curseur 323, qui peut simplement être constitué par une autre mémoire fixe ou à accès aléatoire, et qui est utilisé d'une façon connue pour produire les bits de traits destinés à présenter le point de curseur sur le dispositif d'affichage final. Chacune de ces mémoires produit une pluralité de bits de sortie en parallèle ; ces bits de sortie sont appliqués à un registre à décalage, les bits étant transmis en série et de façon synchronisé à la sorite du registre. En ce qui concerne la mémoire de traits 311 elle réagit au caractère spécifié et à la ligne particulière (ou « tranche ») du caractère en train d'être formé, de façon à produire jusqu'à trente-trois bits de sortie parallèles qui sont appliqués à un registre à décalage 312. Ces bits sortent ensuite en série et de façon synchronisée du registre à décalage 312 sous l'action de l'horloge de base du système. Un signal de validation provenant du circuit de synchronisation 200 (figure 1) amorce cette phase de lecture. Le générateur vidéo de curseur 323 comprend une mémoire qui est sensible à la ligne d'analyse et à la position horizontale du curseur de référence (qui est soumis à la commande de l'opérateur). Pendant chaque trame de télévision, les bits de traits représentant une tranche de caractères sont par conséquent produits par la mémoire 323 lorsque la position d'analyse correspond à la position de référence de curseur définie par l'opérateur. Les bits de traits résultants (au nombre de quatre) sont introduits en parallèle dans un registre à décalage 324 à quatre étages. Ces bits de traits sortent ensuite de façon synchronisée du registre 324 et ils sont combinés avec les bits de traits représentant un caractère, par une porte OU 390.

Jusqu'à ce point de la description de la figure 2, la structure et le fonctionnement du système correspondent à ce qui a été décrit dans le brevet des Etats-Unis d'Amérique n° 3 740 743. Conformément à la présente invention, il est prévu un sous-système 500, destiné à présenter les caractères d'une langue lisible de la droite vers la gauche. Le sous-système 500 comporte un commutateur 505 qui applique le signal de sortie du registre à décalage 312, soit à la porte OU 390 (position A du commutateur 505), soit à un autre commutateur, 510 (position B du commutateur 505). Dans la position A du commutateur 505, le fonctionnement est classique et il correspond à ce qui a été décrit précédemment, la porte OU 390 servant à combiner les bits de traits de caractère et de curseur. Cela est le cas, par exemple, lorsqu'une série de caractères alphanumériques d'une langue lisible de la gauche vers la droite est introduite dans la mémoire de traits 311. Pour utiliser l'équipement avec une langue lisible de la droite vers la gauche, on introduit d'abord dans la mémoire de traits 311 des images symétriques (ou inverses) des caractères alphanumériques à présenter, c'est-à-dire des images telles que vues dans un miroir plan perpendiculaire au sens de lecture. Comme indiqué précédemment, la mémoire de traits 311 peut comprendre une mémoire fixe (ROM) ou une mémoire à accès aléatoire (RAM). Si la mémoire de traits 311 est une mémoire à accès aléatoire RAM ou une mémoire fixe programme PROM, on peut simplement charger l'unité avec les informations de traits appropriées correspondant à des images symétriques des caractères alphanumériques (on a alors simplement affaire aux inverses des traits qui seraient normalement mémorisés pour chaque caractère). Si la mémoire de traits 311 est une mémoire fixe non programmable, elle est initialement pourvue des informations de traits correspondant aux images symétriques. Dans l'un ou l'autre cas, on voit qu'on pourrait éventuellement prévoir une mémoire séparée (ou bien utiliser des emplacements différents de la mémoire existante) pour des symboles alphanumériques d'une langue lisible de la droite vers la gauche. Cependant, il est préférable que la mémoire de traits 311 comprenne une mémoire à accès aléatoire RAM qu'on puisse commodément charger avec des informations de traits appropriées.

Le commutateur 510 comporte une première et une seconde sortie qui sont désignées respectivement par 510F et 510S. Ces sorties sont reliées à une mémoire auxiliaire 520 qui comprend une première unité auxiliaire de mémorisation 521 et une seconde unité auxiliaire de mémorisation 522. En fonction du niveau d'un signal appliqué à l'entrée de commande 510C du commutateur 510, le signal de sortie du commutateur 510 est appliqué à l'une ou à l'autre des unités auxiliaires de mémorisation 521, 522. L'entrée de commande 510C du commutateur 510 reçoit le signal de sortie d'une bascule 530 qui change d'état pour chaque nouvelle ligne d'analyse. En conséquence, la sortie de la bascule 530 change d'état au début de chaque nouvelle ligne d'analyse. Le signal de sortie de la bascule 530 est également appliqué à la borne d'autorisation d'entrée de l'unité de mémorisation 521 et à la borne d'autorisation de sortie de l'unité de mémorisation 522. Le signal de sortie de la bascule 530 est en outre appliqué à un inverseur 535 dont le signal de sortie est transmis à la borne d'autorisation de sortie de l'unité auxiliaire de mémorisation 521 et à la borne d'autorisation d'entrée de l'unité auxiliaire de mémorisation 522. Par conséquent, pendant une ligne d'analyse particulière, le signal de sortie du registre à décalage 312 est transmis à la première unité auxiliaire de mémorisation, 521, quand cette unité est autorisée à recevoir et mémoriser la nouvelle information. En même temps, la seconde unité auxiliaire de mémorisation est autorisée à faire sortir l'information qu'elle avait mémorisée pendant la ligne d'analyse précédente. Au début de la ligne d'analyse suivante, les rôles des unités auxiliaires de mémorisation 521 et 522 sont inversés, la seconde unité auxiliaire de mémorisation 522 recevant alors l'information de bits de traits provenant du registre à décalage 312, tandis que la première unité auxiliaire de mémorisation 521 fournit l'information de bits de traits mémorisée pendant la ligne d'analyse précédente. Les signaux de sortie des unités auxiliaires de mémorisation 521 et 522 sont combinés, à l'aide d'une porte OU 580 dont le signal de sortie est à son tour combiné, par la porte OU 390, avec les bits de traits de curseur.

Dans le mode de réalisation considéré, la première et la seconde unité auxiliaire de mémorisation, 521 et 522, sont des mémoires à accès aléatoire RAM (ou bien des parties différentes de la même mémoire RAM) et des adresses pour lesdites mémoires sont fournies par un générateur d'adresses 550. Ce générateur d'adresses 550 comprend un compteur qui, lorsqu'il est activé, compte des impulsions d'horloge jusqu'à un nombre prédéterminé « N » qui est égal au nombre d'impulsions d'horloge dans une ligne d'analyse. Lorsqu'il est activé par la ligne d'analyse suivante, le compteur effectue alors un comptage décroissant vers zéro. De cette manière, pendant chaque seconde ligne d'analyse, des adresses progressivement croissantes sont engendrées alors que, pendant les lignes d'analyses alternées, des adresses progressivement décroissantes sont engendrées. Puisque les unités auxiliaires de mémorisation 521 et 522 effectuent une lecture puis une écriture pendant des lignes d'analyse successives (bien que déphasées entre elles), cela signifie que l'information emmagasinée dans chacune des unités auxiliaires de mémorisation, 521 et 522 est lue sur une base « dernier entré-premier sorti », c'est-à-dire dans un ordre inverse de celui dans lequel l'information a été écrite en mémoire.

En fonctionnement, lorsqu'on utilise le circuit de présentation de langue lisible de la droite vers la gauche et agencé selon l'invention (position B du commutateur 505), les traits de caractères extraits de la mémoire 311 sont en fait présentés sur l'écran final de la gauche vers la droite. Cependant, lorsque les bits de traits de chaque caractère sont extraits de la mémoire de traits, ils sont accumulés dans une des unités auxiliaires de mémorisation dans l'ordre où ils sont reçus. La ligne d'analyse complète est alors lue (pendant que la ligne d'analyse suivante est en train d'être écrite dans l'autre unité auxiliaire de mémorisation) dans l'ordre opposé à celui où elle a été écrite. En conséquence, les caractères, bien qu'effectivement présentés sur l'écran d'affichage en utilisant une analyse et une présentation de traits de la gauche vers la droite, sont placés dans l'ordre correct de la droite vers la gauche. L'inversion de chaque orientation de caractère, résultant de ce processus, est prise en considération par chargement initial des images symétriques des caractères dans la mémoire de traits 311, comme cela a été décrit ci-dessus. Egalement, puisque les caractères sont maintenant introduits dans le dispositif d'affichage en référence à une présentation de la droite vers la gauche, on doit inverser la référence de curseur, ce problème étant commodément résolu en remplaçant le mode classique de comptage croissant par un mode de comptage décroissant dans le circuit de synchronisation 200 (figure 1).

La présente invention n'est nullement limitée aux modes de réalisation décrits et représentés ; elle est susceptible de nombreuses variantes accessibles à l'homme de l'art, suivant les applications envisagées. Par exemple, bien que dans la description la mémoire auxiliaire soit une mémoire de type RAM (mémoire à accès aléatoire), tout autre type approprié de mémoire peut être utilisé. Par exemple, les unités auxiliaires de mémorisation pourraient comporter des registres à décalage synchronisés, à l'entrée, dans une direction et, à la sortie, dans la direction opposée, de façon à obtenir un mode opératoire « dernier entré-premier sorti ». Dans ce cas, il ne serait pas nécessaire d'utiliser le générateur d'adresses 550. Des informations de caractères en couleur peuvent également être traitées de la même manière que décrit ci-dessus. Dans le cas d'une information en couleur, et puisque sa largeur de bande est bien inférieure à la largeur de bande de luminescence de télévision, il est possible d'opérer à une cadence d'horloge plus faible et avec une moins grande capacité de mémorisation.

**Revendications** (pour les Etats contractants : DE, FR, NL)

1. Dispositif à fonctionnement numérique pour présenter des caractères d'une langue lisible de la droite vers la gauche, utilisable dans un appareil destiné à recevoir une séquence de signaux de représentation de caractères et à engendrer des signaux de commande vidéo appropriés pour commander un dispositif d'affichage, l'appareil comportant un générateur de synchronisation (200) servant à produire des signaux d'horloge qui sont synchronisés avec l'analyse d'affichage, des moyens de mémorisation de caractères (100) servant à mémoriser les signaux représentant des caractères et à extraire périodiquement des signaux correspondant à un caractère de la séquence et un générateur de traits (300) sensible aux signaux d'horloge et aux signaux de représentation de caractères pour produire des bits de traits du caractère à afficher, des moyens (311) pour mémoriser dans le générateur de traits des représentations de traits correspondant à des images symétriques ou inverses d'un ensemble de caractères de la langue, c'est-à-dire à des images telles que vues dans un miroir plan perpendiculaire au sens de lecture, caractérisé en ce que le dispositif à fonctionnement numérique comprend en outre :

— des moyens auxiliaires de mémorisation (520) servant à mémoriser une ligne d'analyse de bits de traits provenant du générateur de traits ; et

— des moyens (510, 530, 535, 550) pour extraire des moyens auxiliaires de mémorisation (520) la ligne d'analyse de bits de traits dans un ordre inverse de celui où les bits de traits ont été introduits dans les moyens auxiliaires de mémorisation.

2. Dispositif à fonctionnement numérique selon la revendication 1, caractérisé en ce que les moyens auxiliaires de mémorisation (520) comprennent une première (521) et une seconde (522) mémoire qui sont alternativement enclenchables pour introduire et extraire des lignes d'analyse successives de bits de traits, de façon qu'une ligne d'analyse soit en train d'être extraite pendant que la ligne d'analyse suivante est en train d'être introduite en mémoire.

3. Dispositif à fonctionnement numérique selon la revendication 2, caractérisé en ce que chacune des première (521) et seconde (522) mémoires est une mémoire à accès aléatoire.

**Revendications** (pour l'Etat contractant GB)

1. Dispositif à fonctionnement numérique pour présenter des caractères d'une langue lisible de la droite vers la gauche, utilisable dans un appareil destiné à recevoir une séquence de signaux de représentation de caractères et à engendrer des signaux de commande vidéo appropriés pour commander un dispositif d'affichage, l'appareil comportant un générateur de synchronisation (200) servant à produire des signaux d'horloge qui sont synchronisés avec l'analyse d'affichage, des moyens de mémorisation de caractères (100) servant à mémoriser les signaux représentant des caractères et à extraire périodiquement des signaux correspondant à un caractère de la séquence et un générateur de traits (300) sensible aux signaux d'horloge et aux signaux de représentation de caractères pour produire des bits de traits du caractère à afficher, dispositif à fonctionnement numérique, caractérisé en ce qu'il comprend :

— des moyens (311) pour mémoriser dans le générateur de traits des représentations de traits correspondant à des images symétriques ou inverses d'un ensemble de caractères de la langue, c'est-à-dire à des images telles que vues dans un miroir plan perpendiculaire au sens de lecture ;

— des moyens auxiliaires de mémorisation (520) servant à mémoriser une ligne d'analyse de bits de traits provenant du générateur de traits ; et

— des moyens (510, 530, 535, 550) pour extraire des moyens auxiliaires de mémorisation (520) la ligne d'analyse de bits de traits dans un ordre inverse de celui où les bits de traits ont été introduits dans les moyens auxiliaires de mémorisation.

2. Dispositif à fonctionnement numérique selon la revendication 1, caractérisé en ce que les moyens auxiliaires de mémorisation (520) comprennent une première (521) et une seconde (522) mémoire qui sont alternativement enclenchables pour introduire et extraire des lignes d'analyse successives de bits de traits, de façon qu'une ligne d'analyse soit en train d'être extraite pendant que la ligne d'analyse suivante est en train d'être introduite en mémoire.

3. Dispositif à fonctionnement numérique selon la revendication 1, caractérisé en ce que les moyens (311) pour mémoriser dans le générateur de traits (300) des représentations de traits comprennent une mémoire à accès aléatoire.

4. Dispositif à fonctionnement numérique selon la revendication 2, caractérisé en ce que chacune des première (521) et seconde mémoires (522) est une mémoire à accès aléatoire.

**Claims** (for the contracting States : DE, FR, NL)

1. Device functioning digitally to display signs of a legible language from right to left, which can be used in an apparatus intended for receiving a sequence of representation signals of signs and for creating video control signals suitable for controlling a display device, with said apparatus comprising a synchronization generator (200) which serves for producing clock signals which are synchronized with the display analysis, means for storing the signs (100), serving for storing the signals representing the signs and to read out periodically signals which correspond to a sign of the sequence, and a stroke generator (300) which is sensitive to the clock signals and the signals representing signs for producing bits and strokes of signs to be displayed,

— means (311) for storing in the stroke generator the representations of strokes corresponding to symmetrical or inverse images of a unit of language signs, i.e. images as seen in a mirror plane, perpendicular to the sense of reading ; said device which functions digitally being further characterized in that it comprises :

— auxiliary storing means (520) for storing an analysis line of bits of strokes coming from the stroke generator ; and

— means (510, 530, 535, 550) for reading out from the auxiliary storing means (520) the analysis line of bits of strokes in an order inverse to the one where the bits of strokes have been introduced into the auxiliary storing means.

2. Device functioning digitally according to claim 1, characterized in that the auxiliary storage means (520) comprise a first (521) and a second (522) store which stores can be actuated alternatively to carry in or read out successive analysis lines of bits of strokes, in such a manner that an analysis line is in the process of being read out while the following analysis line is in the process of being carried into the store.

3. Device functioning digitally according to claim 2, characterized in that each of the first (521) and second (522) stores is a store with random access.

**Claims** (for the contracting State GB)

1. Device functioning digitally to display signs of a legible language from right to left, which can be used in an apparatus intended for receiving a sequence of representation signals of signs and for creating video control signals suitable for controlling a display device, with said apparatus comprising a synchronization generator (200) which serves for producing clock signals which are synchronized with the display analysis, means for storing the signs (100), serving for storing the signals representing the signs and to read out periodically signals which correspond to a sign of the sequence, and a stroke generator (300) which is sensitive to the clock signals and the signals representing signs for producing bits and strokes of signs to be displayed, said device which functions digitally being characterized in that it comprises :

— means (311) for storing in the stroke generator the representations of strokes corresponding to symmetrical or inverse images of a unit of language signs, i.e. images as seen in a mirror plane, perpendicular to the sense of reading ;

— auxiliary storing means (520) for storing an analysis line of bits of strokes coming from the stroke generator ; and

— mean (510, 530, 535, 550) for reading out from the auxiliary storing means (520) the analysis line of bits of strokes in an order inverse to the one where the bits of strokes have been introduced into the auxiliary storing means.

2. Device functioning digitally according to claim 1, characterized in that the auxiliary storage means (520) comprise a first (521) and a second (522) store which stores can be actuated alternatively to carry in or read out successive analysis lines of bits of strokes, in such a manner that an analysis line is in the process of being carried into the store.

3. Device functioning digitally according to claim 1, characterized in that the means (311) for storing in the stroke generator (300) the representations of strokes comprise a store with random access.

4. Device functioning digitally according to claim 2, characterized in that each of the first (521) and second (522) stores is a store with random access.

**Ansprüche** (für die Vertragstaaten : DE, FR, NL)

1. Digital arbeitende Vorrichtung zur Darstellung von Zeichen einer lesbaren Sprache von rechts nach links, verwendbar in einem Apparat, der zum Empfang einer Folge von Repräsentationssignalen von Zeichen bestimmt ist und zur Schaffung von Videosteuersignalen, geeignet zur Steuerung einer Anseigevorrichtung, wobei der genannte Apparat einen Synchronisier-Generator (200) einschliesst, der zur Schaffung von Taktgebersignalen dient, die mit der Anzeige-Analyse synchronisiert sind, Mitteln zum Speichern der Zeichen (100), die zum Speichern der Signale dienen, welche die Zeichen repräsentieren, und periodisch Signale auslesen, die einem Zeichen der Folge entsprechen, und einen Strichgenerator (300), der auf die Taktgebersignale anspricht und die Signale, die Zeichen zur Schaffung von Bits und Strichen von anzuzeigenden Zeichen repräsentieren,

— Mittel (311) zum Speichern im Strichgenerator von Repräsentationen von Strichen, die symmetrischen und umgekehrten Abbildern einer Einheit von Sprachzeichen, nämlich Abbildern, wie sie in einer Spiegelebene, senkrecht zur Leserichtung, gesehen werden, dadurch gekennzeichnet, dass die digital arbeitende Vorrichtung weiterhin einschliesst ;

— Hilfsspeichermittel (520) zum Speichern einer Analysenzeile von Bits von Strichen, die aus dem Strichgenerator kommen ; und

— Mitteln (510, 530, 535, 550) zum Auslesen aus den Hilfsspeichermitteln (520) der Analysenzeite von Bits von Strichen in umgekehrter Ordnung zu der, wo die Bits der Striche in die Hilfsspeichermittel eingeführt wurden.

2. Digital arbeitende Vorrichtung gemäss Anspruch 1, dadurch gekennzeichnet, dass die Hilfsspeichermittel (520) einen ersten (521) und zweiten (522) Speicher einschliessen, welche Speicher abwechselnd betätigt werden können, um aufeinanderfolgende Analysezeilen von Bits von Strichen einzubringen oder auszulesen, auf solche Weise, dass eine Analysenzeile sich auf der Stufe des Auslesens befindet, während die folgende Analysenzeile sich auf der Stufe des Einbringens in den Speicher befindet.

3. Digital arbeitende Vorrichtung gemäss Anspruch 2, dadurch gekennzeichnet, dass ein jeder des ersten (521) und zweiten (522) Speichers ein Speicher mit aleatorischem Zugang ist.

**Ansprüche** (für den Vertragsstaat GB)

1. Digital arbeitende Vorrichtung zur Darstellung von Zeichen einer lesbaren Sprache von rechts nach links, verwendbar in einem Apparat, der zum Empfang einer Folge von Repräsentationssignalen von Zeichen bestimmt ist und zur Schaffung von Videosteuersignalen, geeignet zur Steuerung einer Anzeigevorrichtung, wobei der genannte Apparat einen Synchronisier-Generator (200) einschliesst, der zur Schaffung von Taktgebersignalen dient, die mit der Anzeige-Analyse synchronisiert sind, Mitteln zum Speichern der Zeichen (100), die zum Speichern der Signale dienen, welche die Zeichen repräsentieren, und periodisch Signale auslesen, die einem Zeichen der Folge entsprechen, und einen Strichgenerator (300), der auf die Taktgebersignale anspricht und die Signale, die Zeichen zur Schaffung von Bits und Strichen von anzuzeigenden Zeichen repräsentieren, welche digital arbeitende Vorrichtung dadurch gekennzeichnet ist, dass diese einschliesst :

— Mittel (311) zum Speichern im Strichgenerator von Repräsentationen von Strichen, die symmetrischen und umgekehrten Abbildern einer Einheit von Sprachzeichen, nämlich Abbildern, wie sie in einer Einheit von Sprachzeichen, nämlich Abbildern, wie sie in einer Spiegelebene, senkrecht zur Leserichtung, gesehen werden ;

— Hilfsspeichermittel (520) zum Speichern einer Analysenzeile von Bits von Strichen, die aus dem Strichgenerator kommen ; und

— Mitteln (510, 530, 535, 550) zum Auslesen aus den Hilfsspeichermittel (520) der Analysenzeite von Bits von Strichen in umgekehrter Ordnung zu der, wo die Bits der Striche in die Hilfsspeichermittel eingeführt werden.

2. Digital arbeitende Vorrichtung gemäss Anspruch 1, dadurch gekennzeichnet, dass die Hilfsspeichermittel (520) einen ersten (521) und zweiten (522) Speicher einschliessen, welche Speicher abwechselnd betätigt werden können, um aufeinanderfolgende Analysezeilen von Bits von Strichen einzubringen oder auszulesen, auf solche Weise, dass eine Analysenzeile sich auf der Stufe des Auslesens befindet, während die folgende Analysenzeile sich auf der Stufe des Einbringens in den Speicher befindet.

3. Digital arbeitende Vorrichtung gemäss Anspruch 1, dadurch.gekennzeichnet, dass die Mittel (311) zum Speichern im Strichgenerator (300) von Repräsentationen von Strichen einen Speichermit aleatorischem Zugang enthälten.

4. Digital arbeitende Vorrichtung gemäss Anspruch 2, dadurch gekennzeichnet, dass ein jeder des ersten (521) und zweiten (522) Speichers ein Speicher mit aleatorischem Zugang ist.

# FIG_1

"ART ANTÉRIEUR"

FIG. 2

0 005 672